Europäisches Patentamt

(19) European Patent Office

Office européen des brevets

(11) Publication number: **0 071 573**
**A2**

(12) **EUROPEAN PATENT APPLICATION**

(21) Application number: **82810314.3**

(22) Date of filing: **23.07.82**

(51) Int. Cl.³: **B 62 D 49/06**

(30) Priority: **23.07.81 US 286241**

(43) Date of publication of application:
**09.02.83 Bulletin 83/6**

(84) Designated Contracting States:
**BE DE FR GB IT SE**

(71) Applicant: **Hilmer, Elwyn P.**
**P. O. Box 457 975 Newport**
**Bandon Oregon 97411(US)**

(72) Inventor: **Hilmer, Elwyn P.**
**P. O. Box 457 975 Newport**
**Bandon Oregon 97411(US)**

(74) Representative: **Steiner, Martin et al,**
**c/o AMMANN PATENTANWAELTE AG BERN**
**Schwarztorstrasse 31**
**CH-3001 Bern(CH)**

(54) **High-clearance agricultural tractor with four-wheel steering.**

㉗ A farm tractor with a high center frame between the front and rear axles to permit implement hitches to be located in the front, middle and rear of the tractor combined with four wheel, front and rear steering (auto type) to maintain the orientation of tractor body parallel to its direction of travel for accurate row crop mounted implement tool tracking on hillside slopes and to permit the tractor to be zigzagged laterally over the center of the center mounted implements.

FIG. 9

FIG. II

Background of the Invention

The concept of farm tractors is well known in the art. There are farm tractors with rear wheel steering, front wheel steering, four wheel crab steering and four wheel coordinated steering. There are tractors with front wheel drive, rear wheel drive and four wheel drive. There are also many specialized tractors for use in production and harvesting of specialized crops. The present invention provides a tractor for use in farming of conventional crops such as oats, corn, soybeans and the like and, more specifically, a tractor for use with interrow cropping equipment that may be operated on slopes or side hills.

Briefly, interrow cropping involves the precise planting of second or third crops in narrow gaps between the rows of a standing crop. Such a system of interrow cropping is more fully shown and described in my copending application U.S. Serial No. 151,662 filed May 20, 1980 titled "Method of and Apparatus for Interrow Cropping". Generally, if the planted area is hilly, it is extremely difficult for the tractor and the wide interrow implement to accurately follow the narrow gaps between the rows; however, if the field is flat, there generally is no problem. The difficulty in driving on side hills is that the tractor has a tendency to slip sideways down the hill as it propels itself along the side hill.

If the implement is front or rear mounted, the tractor presents an unbalanced weight which causes the tractor to crab on side hills. In order to traverse a side hill one must turn the tractor wheels at a slight angle to the tractor body to maintain a straight tractor heading. Thus, as the tractor body traverses along a side hill, the tractor body proceeds along a straight path with the tractor body located at a slight angle with respect to the path of the tractor. This angle is referred to as the crab angle.

In first crop planting the lack of alignment between the axis of the tractor body and the tractor path is of no particular concern since the tractor does not have to follow a straight path on an open field. However, when planting a second crop in the gaps between the rows of standing crops located on side hills or slopes it is a more difficult task to plant second crops with conventional front or rear mounted equipment, especially the wide equipment used with interrow equipment. An analysis of tractor motion shows that with wide equipment the outermost planters are more sensitive to tractor body position since the rotational displacement of the outermost planters is proportional to the crab angle and the distance the equipment projects from the side of the tractor. Thus, a small crab angle is magnified by wide equipment. In addition, the displacement of the tractor wheels from the straight path produces a displacement in conjunction with the rotation which makes it difficult for a tractor with wide equipment to accurately follow the narrow gaps between the rows of standing crops. Unfortunately, if interrow cropping systems are used, the gaps between the rows are small, which requires the tool bar and implement to closely follow the gaps between the rows. When the implements are mounted on the front or rear of the tractor, the problem is compounded. The present invention provides a tractor that can more easily follow the narrow gaps between the rows.

The present invention provides an improvement by providing a tractor with a center mounted implement and four wheel crab steering which coact to minimize the crab angle effect by permitting both front and rear wheels to be turned to minimize the lack of alignment of the tractor body with the tractor path. The center mounting of the implement not only reduces the normal displacement that occurs when the tractor body is not in alignment with the path of travel but it also reduces the rotational effects since the translation motion is lessened when the equipment is mounted at the center of the tractor.

## Description of the Prior Art

The concept of tractors with front or rear hitch or center mount equipment is known. The center mount equipment comprises some of the early farm machinery tractor attachments which had two part cultivators that were attached to both sides of the tractors. These prior art tractors did not have high center clearance nor could they handle wide equipment since the operator would usually have to separately attach each part of the cultivator to the side of the tractor. These prior art tractors were also limited by use of single axle steering and single axis drive. The concept of prior art tractors with high center clearance is also known; however, the prior art high center clearance tractor did not have front and rear steering to permit use in intercropping.

## Brief Summary of the Invention

Briefly, the invention comprises a tractor having a front mounted engine and a rear mounted cab connected together by telescoping frame members. The tractor has sufficiently high center clearance to permit center mounting of the implement. The telescoping frame members permit one to extend the tractor body and widen the central implement spacing in the tractor so that the tractor can be driven onto the center mounted implements. Four wheel crab steering permits the operator to better maintain the orientation of the tractor body with respect to path of the tractor.

## Brief Description of the Drawing

Fig. 1 is a side view of my tractor and a center mounted implement;

Fig. 2 is a top view of my tractor without a center mount implement and in a partially extended position;

Fig. 3 is a top view of my tractor with a center mount implement;

Fig. 4 is a front view of my tractor;

Fig. 5 is a top view of the extendible tractor frame;

Fig. 6 is a side view of the extendible tractor frame;

Fig. 7 is an end view of the extendible tractor frame;

Fig. 8 is a schematic diagram illustrating the mounting of a center mount implement;

Fig. 9 is a schematic illustration of tractor slippage on a side hill;

Fig. 10 is a schematic illustration of tractor slippage compensation on a side hill; and

Fig. 11 is a schematic illustration of the amount of slippage of a tractor on a side hill.

## Description of the Preferred Embodiment

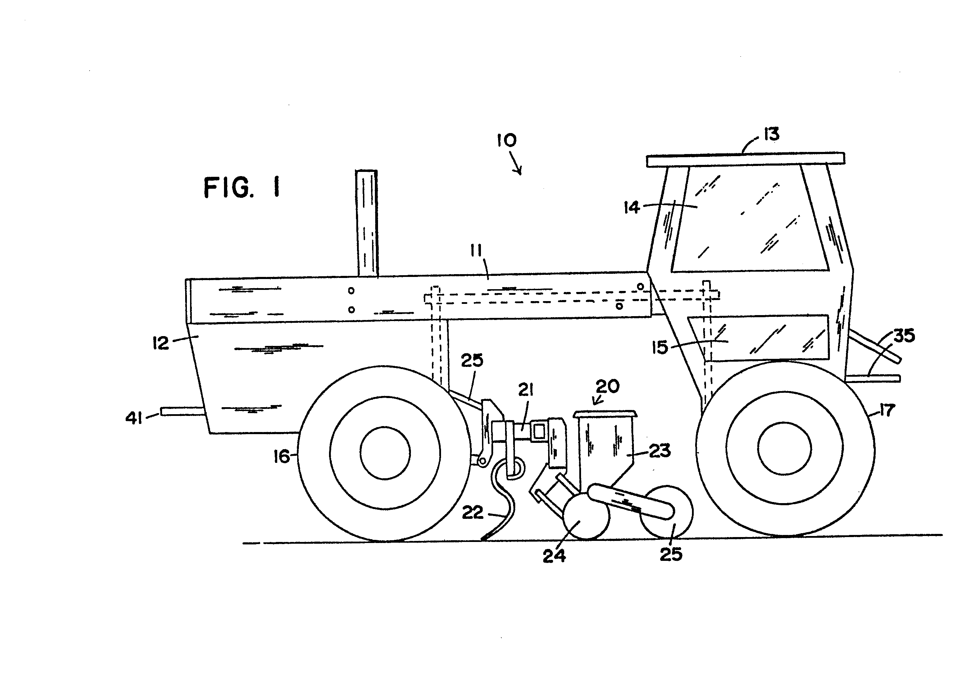

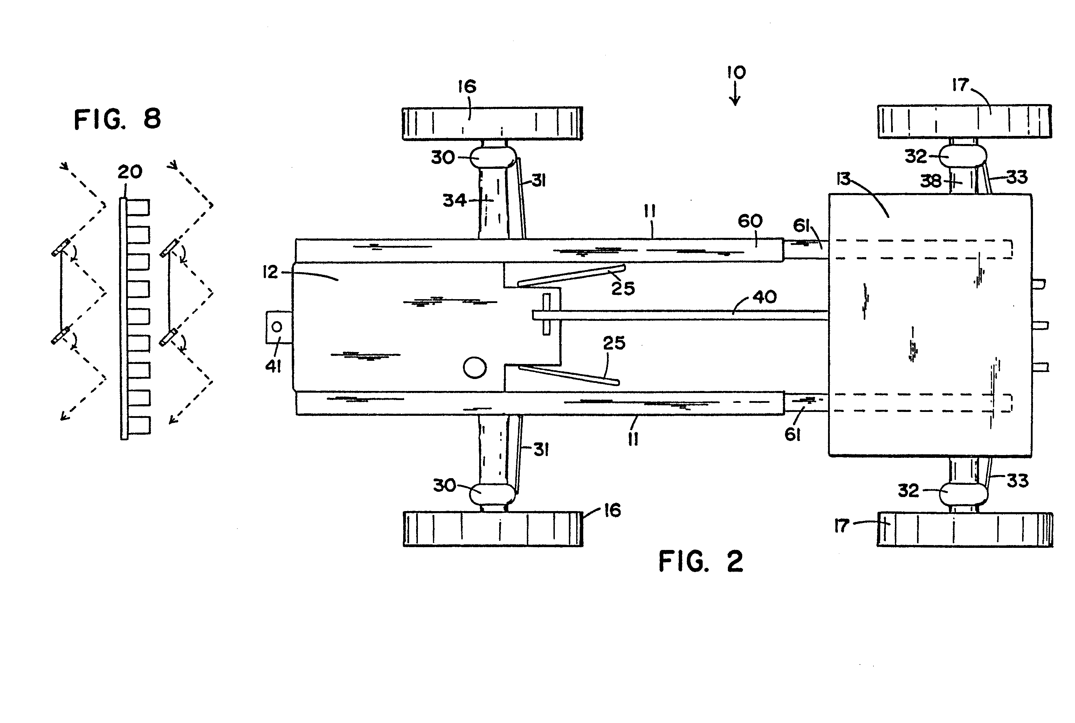

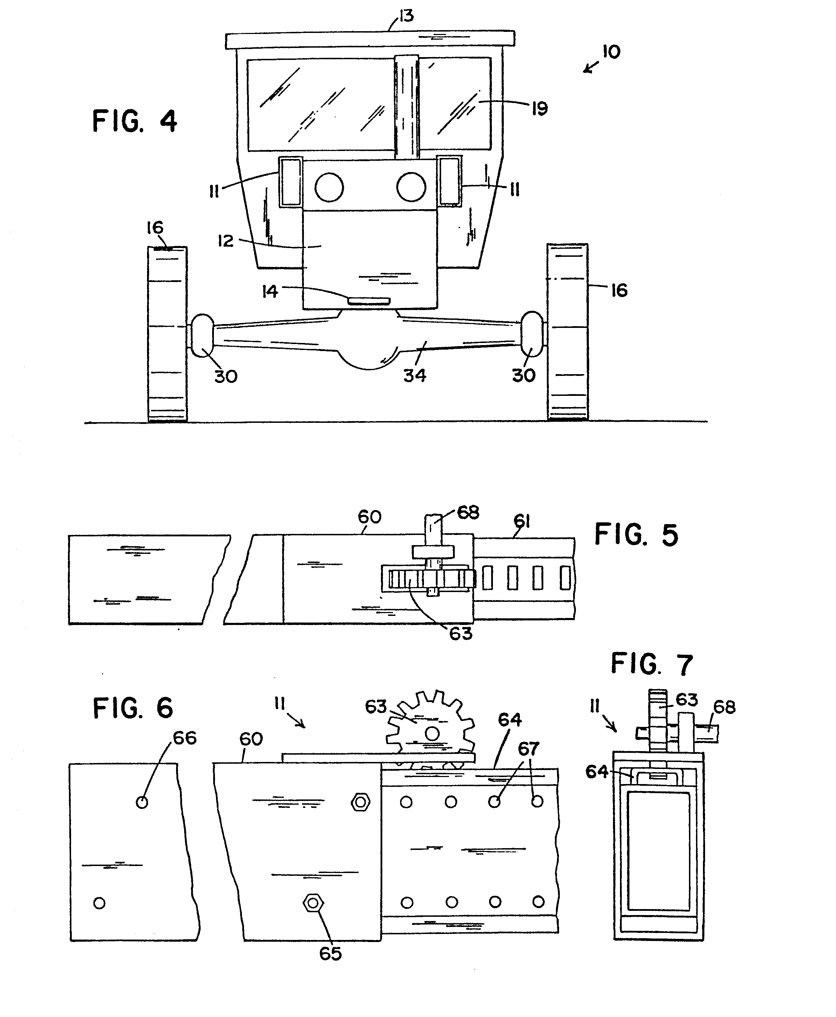

Referring to Figs. 1 and 2, reference numeral 10 generally designates my high center clearance tractor having a front mounted engine 12 and a rear mounted operator cab 13 connected to each other by a pair of extendible frame members 11. Located between operator cab 13 and engine 12 is a space for a center mount implement 20. Operator cab 13 has side windows 14 and 15 for operator side visibility. Fig. 4 shows a front window 19 that permits an operator to look directly at a center mounted implement 20 which is attached to the center of the tractor with a three point hitch 25. While a three point hitch is shown, my invention could also use single or other multiple point hitches. One advantage of the center mounted implement is that the operator can directly see both the gaps between the rows of standing crops and the implement. Under these conditions the operator has little difficulty in guiding the tractor and the implement between the gaps in the rows of standing crops. My tractor 10 also includes a front hitch 41 for use in farm implement applications such as fertilizer applicators, insecticide applicators or knifing in ammonia. In addition, a three point hitch 35 is located on the rear of tractor 10. Hitch 35 may also be single or multiple and can be used for rear mount implements such as herbicide applications or the like.

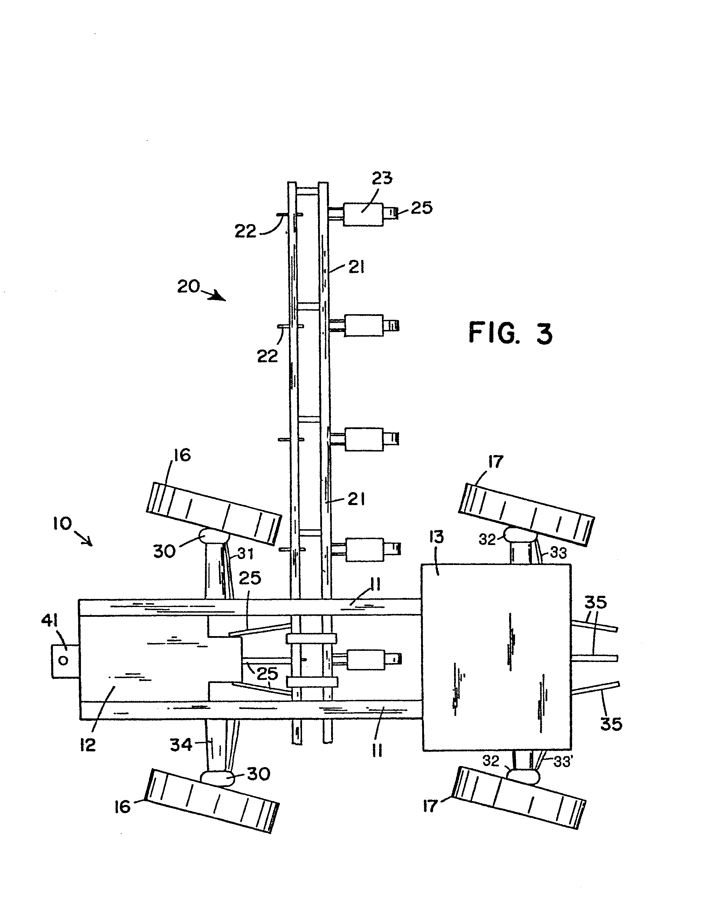

A pair of front wheels 16 and rear wheels 17 are located on opposite ends of the tractor 10 with wheels 16 located forward of implement 20 and wheels 17 located rearward of implement 20. Implement 20 comprises a planter having a seed box 23, disc openers 24, a press wheel 25 and a spring tine 22 for loosening the soil in front of disc openers 24. The planting units are connected to a tool bar 21, which, as shown in Fig. 3, extends a considerable distance from both sides of tractor 10. While an interrow planter is shown, it is apparent that other equipment could also be mounted on my tractor 10. Typical of other equipment which may be used are cultivators, grain drills, sprayers and fertilizer applicators.

Figs. 2 and 4 show tractor 10 has a front axle 34 and a pair of steering housings 30 that are connected thereto by steering rods 31 to provide front wheel steering. Similarly, there is a rear axle 38 with a pair of steering housings 32 with steering rods 33 connected thereto to provide rear wheel steering. Tractor 10 is shown with four wheel crab steering which is illustrated more clearly by the cramped position of the wheels (Fig. 3). By crab steering it is meant that all four wheels can be turned by an operator to control the front and rear of the tractor.

The steering of my tractor 10 can be accomplished through a conventional crab steering mechanism which permits turning of the front and rear wheels by an operator located in cab 13. Tractor 10 is powered by motor 12 through either a mechanical or hydrostatic drive mechanism.

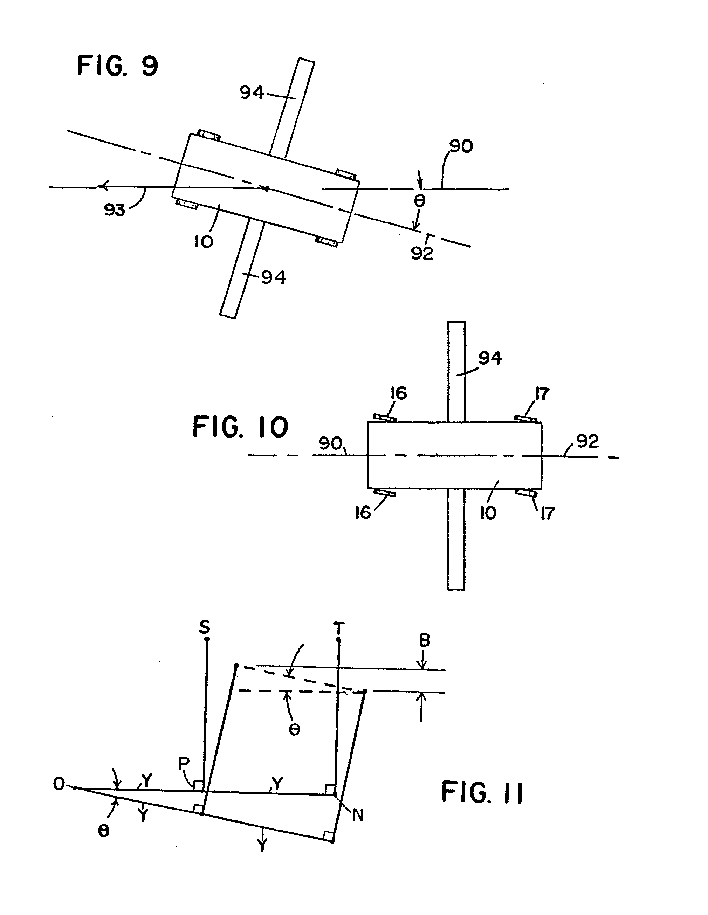

To illustrate the effect of tractor slippage on a side hill, reference should be made to Fig. 9 which shows in exaggerated proportions the effects of slippage. Reference numeral 90 denotes the straight travel path it is desired to have tractor 10 follow. The central axis of the body of tractor 10 is denoted by reference numeral 92 with reference numeral 93 indicating the direction of forward motion of tractor 91. Note, tractor 10 makes an angle θ with respect to the travel path 90. When the tractor crabs at an angle, the implements 94 attached to tractor 10 reduce the spacing between planters located on the tool bar in proportion to the distance from the tractor body. It is this feature of crabbing which is minimized by my tractor.

Fig. 10 illustrates how my tractor can compensate for slippage by slightly angling both the front and rear wheels. Note, axis 92 of tractor body 10 is substantially in alignment with row 90. In this condition implement bars 94 are maintained perpendicular to travel path 90. However, it is difficult to precisely hold the tractor as shown in Fig. 10. For example, if the rear end of the tractor should slip down the hill, it is apparent that before it is corrected implement bar 94 may have uprooted some standing crops. If the implement bar is located on the rear of the tractor and the rear wheels slip, one notes the implement bar on the rear of the tractor is displaced more than an implement bar on the center of the tractor.

A reference to Fig. 11 schematically illustrates the difference between a rear and center mounted implement. Points O and N represent the ends of the tractor and point P represents the center of the tractor. The implements project perpendicular from the tractor body 10 and the slippage angle is denoted by θ. The difference in horizontal displacement between a center mounted implement denoted by lines P   S and a rear mounted implement denoted by lines NT is B. From elementary mathematical computation and assuming θ is small, we can approximate B as Y tangent θ. If θ is only 2° and Y is 10 feet, we have an additional displacement of B approximately 4.2 inches between a front and rear mounted implement.

Referring to the details of my tractor, reference should be made to Fig. 2 which shows the front of tractor 10 connected to the rear of tractor 10 through a pair of telescoping frame members 11 which are shown in greater detail in Figs. 5, 6 and 7. Similarly, a telescoping drive mechanism 40 connects to the front and rear of tractor to permit front wheel and rear wheel steering from an operator located in rear mounted cab 13. Telescoping drive mechanism also transmits power to the rear wheels if four wheel drive is desired. In the preferred embodiment the telescoping frame members comprise a first box member 60 that telescopes outside a second box member 61. As members 61 and 60 slide with respect to one another, they can either expand or contract the tractor body. An actual mechanism for telescoping the members is shown as a cog wheel drive 63 which engages a rack of mating teeth 64 on inner telescoping member 61. Through power supplied to shaft 68 from the tractor or manually one can rotate gear 63 clockwise or counterclockwise to either extend or contract the tractor body.

In the extended position the tractor can be driven onto a center mount implement in a zigzag manner as illustrated in schematic form in Fig. 8, i.e., by driving forward, turning all four wheels and then driving backwards and continuing in this zigzag manner one can quickly and efficiently position the tractor in the middle of a center mount implement. This eliminates the need for lifting and moving the center mount implement and the difficulty normally encountered in attaching long implements. Once the implement is in mounting position, the operator attaches the implement to three point hitch 25. The operator then contracts the telescoping members 60 and 61 and fastens the two telescoping members 60 and 61 to each other through bolts and nuts 65 which fit into openings 66 and 67 to thereby hold the front and back of the tractor in the proper position. While a mechanical member is shown for telescoping the frame members, it is apparent other mechanisms such

-8-

as hydraulic members could also be used.  From an inspection of the
drawing it is apparent that the term high center clearance tractor
includes a vehicle in which the top structural portion of the front
section of a tractor is connected to the top structural portion of
the rear section of the tractor with frame members or the like.
It should be understood that the operator cab does not constitute
a structural support of the tractor but only an area for the convenience of the operator.

Claims:

1. A tractor having a first section and a second section for use in field work requiring accurate alignment of the tractor body with the direction of travel of the tractor comprising:

a frame connecting said first section to said second section, an implement attachment section located proximate said frame;

said implement attachment section is located on said first section of said tractor with said frame having sufficiently high clearance to permit an operator to mount equipment beneath said frame of said tractor;

a first ground engaging means connected to said first section and a·second ground engaging means connected to said second section, said first ground engaging means and said second ground engaging means operable for turning to control the direction of travel of said tractor;

an engine for propelling said tractor; and

an operator area located on said tractor to permit an operator to visually observe both the crops and an implement attached to said tractor.

2. The invention of claim 1 including front wheel drive for propelling said tractor.

3. The invention of claim 1 including rear wheel drive for propelling said tractor.

4. The invention of claim 1 including front wheel drive and rear wheel drive for propelling said tractor.

5. The invention of claim 1 including a center mount implement hitch.

6. The invention of claim 5 wherein said center mount implement hitch comprises a three point hitch.

7. The invention of claim 1 wherein said tractor includes a front mounted implement hitch and a rear mount implement hitch.

8. The invention of claim 1 wherein said frame is extendible to permit expansion and contraction of said first section of said tractor with respect to said second section of said tractor.

9. The invention of claim 1 wherein said engine is located in said first section of said tractor.

10. The invention of claim 1 wherein said operator area is located in said second section of said tractor.

11. A tractor having a first section and a second section for use in field work comprising:

a frame connecting said first section to said second section, an implement attachment section located proximate said frame;

said frame expandible to permit extension and contraction of said first section of said tractor with respect to said second section of said tractor;

a first ground engaging means connected to said first section and a second ground engaging means connected to said second section, said first ground engaging means and said second ground engaging means operable for turning to control the direction of travel of said tractor;

an engine for propelling said tractor; and

an operator area located on said tractor to permit an operator to visually observe both the crops and an implement attached to said tractor.

12. The invention of claim 11 wherein said implement attachment section is located on said first section of said tractor with said frame having sufficiently high clearance to permit an operator to mount equipment beneath said frame of said tractor.

13. The invention of claim 12 wherein said implement attachment section includes a three point hitch.

14. The invention of claim 11 wherein said engine is located in said first section.

15. The invention of claim 14 wherein said operator area is located in said second section of said tractor.

16. The invention of claim 15 including a center mount implement that projects outward from said tractor at substantially a right angle to said tractor.

17.    The invention of claim 16 including a front implement hitch on said tractor.

18.    The invention of claim 17 including a rear implement hitch on said tractor.

19.    The invention of claim 18 wherein said frame comprises at least two members that telescope within one another to expand and contract said tractor.

20.    The invention of claim 19 wherein said members that telescope include a cog wheel drive for expansion and contraction of said frame.

21.    The invention of claim 20 wherein said implement comprises a planter.

22.    The invention of claim 21 wherein said tractor has front and rear wheel drive.

23.    The invention of claim 22 wherein said tractor has an operator cab located thereon.

24.    The method of mounting an implement on a high clearance tractor comprising the steps of:

driving alongside an implement to be mounted on said high clearance tractor; and

driving the tractor laterally in a zigzag fashion until the tractor is located over the implement attaching point.

Claim(s) Nr17-23    deemed
to be abandoned

FIG. 1

10

13

14

11

12

15

35

25

41

21

20

16

23

22

17

24

25

FIG. 2

FIG. 8

FIG. 3

0071573

**FIG. 4**

**FIG. 5**

**FIG. 6**

**FIG. 7**

FIG. 9

94

90

93

θ

10

92

94

FIG. 10

94

16

17

90

92

16

10

17

S

T

B

θ

P

O

Y

Y

θ

N

Y

FIG. 11